# EUROPEAN PATENT SPECIFICATION

(11) **EP 3 112 603 B1**
(45) Date of publication and mention of the grant of the patent: **10.11.2021**
(21) Application number: 16177671.1
(22) Date of filing: 02.07.2016
(51) Int. Cl.: F01D 11/00, F01D 11/02, F01D 5/08

(54) **LABYRINTH SEAL FOR A ROTATING MACHINE, THE SEAL USING THE COANDA EFFECT**
DICHTUNG FÜR EINE DREHMASCHINE, WOBEI DIE DICHTUNG DEN COANDA-EFFEKT NUTZT
JOINT D'ÉTANCHÉITÉ POUR UNE MACHINE TOURNANTE, LE JOINT UTILISANT L'EFFET COANDA

(30) Priority: 03.07.2015 IT UB20151927
(43) Date of publication of application: 04.01.2017
(73) Proprietor: ANSALDO ENERGIA S.p.A., 16152 Genova (IT)
(72) Inventor: D'Alessandro, Alessio, 16159 Genova (IT)
(74) Representative: Bernotti, Andrea

(56) References cited:
- EP-A2- 2 354 463
- US-A- 5 890 873

## Description

The invention relates to a seal for a rotating machine and to a rotating machine comprising said seal.

Generally speaking, rotating machine, such as for example gas turbines comprising a compressor and a turbine, extend along an axis and comprise a stator and a rotor. The rotating machine comprises seals arranged between the rotor and the stator, so as to prevent a flow from leaking from a higher pressure area to a lower pressure area. In a preferred embodiment, the aforesaid seals are labyrinth seals.

A drawback of the prior art lies in the fact that there is a decrease in the performances of the rotating machine due to a flow leaking through the seals.

Document US5890873 discloses a labyrinth seal with teeth having bevelled edges. In this document, the flow passing a teeth may detach from the angled surface and the injection of the coolant in the downstream cavity between two teeth is not optimal.

In document EP2354463A2 a labyrinth seal has a particular geometry on the stator side. This geometry may make use of the Coanda effect, but does not present teeth having a first and second surface which extend transversely to the direction of extension of the seal.

Therefore, the object of the invention is to provide a seal that reduces the drawbacks of the prior art.

According to the invention, there is provided a seal for a rotating machine; the seal being configured to reduce the passage of a flow from a first higher pressure side to a second lower pressure side and comprising at least a base; at least one row of teeth, which extends in length from the first side to the second side along a direction of extension of the seal and protrudes from the base radially to the direction of extension; at least one cavity arranged between respective two adjacent teeth of the row of teeth; wherein at least one of the teeth has a first and a second surface which extend transversely to the direction of extension, and a third surface which extends between the first and the second surface and transversely thereto; wherein the third surface is shaped so as to divert the incoming flow towards the cavity adjacent to the second surface; wherein the tooth has an edge, defined by the third surface and by the second surface, being rounded or bevelled so that a part of the flow is deviated towards the cavity adjacent to the second surface due to the Coanda effect.

Thanks to the invention, the seal enables better performances compared to those of prior art seals, since a portion of the flow flowing into the seal is deviated into the cavity due to the Coanda effect, thus dissipating its kinetic energy and reducing the portion of flow leaking out of the second side.

According to a preferred embodiment of the invention, the third surface extends from one end of the first surface to one end of the second surface degrading along the direction of extension from the first side to the second side.

According to another preferred embodiment of the invention, the third surface is curved, preferably convex with its convexity facing towards the second side at a lower pressure.

Thanks to the invention, the performances of the seal are increased because a greater portion of the flow flowing into the seal is deviated towards the inside of the cavity, instead of leaking towards the following tooth.

According to another preferred embodiment of the invention, the ratio between a thickness of the tooth and a width of the cavity is greater than 0.25, preferably said ratios between different teeth and cavities of said row of teeth are equal one to the other.

According to another preferred embodiment of the invention, the seal comprised a static part, a rotating part and an interstice separating the static part from the rotating part; the ratio between a thickness of the tooth and a minimum height of the interstice being greater than 0.3, preferably said ratios of the different teeth of said row of teeth being equal to each other.

Thanks to the invention, the third surface is suited to deviate the flow towards the inside of the cavity.

According to another embodiment of the invention, the seal is labyrinth type.

According to another embodiment of the invention, the seal comprises a number of teeth greater than two, wherein the teeth are distributed with a constant pitch along the direction of extension.

According to another preferred embodiment of the invention, the seal comprises a number of teeth greater than two and the majority of teeth of the row of teeth have a first and a second surface extending transversely to the direction of extension, and a third surface extending between the first and the second surface and transversely thereto; and wherein the first surface faces the first higher pressure side and the second surface faces the second lower pressure side; preferably, the third surface extends from one end of the first surface to one end of the second surface degrading along the direction of extension in a direction that goes from the first side to the second side.

According to another embodiment of the invention, the seal comprises another row of teeth comprising at least one cavity and facing the row of teeth. In this case, the interstice extends between the row of teeth and the other row of teeth.

According to another embodiment of the invention, the teeth of the row of teeth are distributed with a first distribution pitch along the direction of extension; the teeth of the other row of teeth are distributed with a second distribution pitch along the direction of extension; and wherein the first distribution pitch is different from the second distribution pitch.

According to another embodiment of the invention, the seal comprises a base from which the row of teeth protrudes; the second surface is inclined with respect to the base, preferably towards the second lower pressure side.

Another object of the present invention is to provide a rotating machine that can reduce the drawbacks of the prior art.

According to the invention, there is provided a rotating machine having a stator; a rotor and which extends along an axis; and a seal arranged between the stator and the rotor, and made according to any one of the claims from 1 to 13.

Thanks to the invention, the rotating machine ensures better performances compared to the prior art because of a reduction of the flow leaking through the seal and of a consequent decrease in the loss of power.

According to a preferred embodiment of the invention, the row of teeth is connected to the rotor.

According to another preferred embodiment of the invention, the row of teeth is connected to the stator.

According to another preferred embodiment of the invention, the rotor is formed by at least two rotor disks, joined one to the other and the seal is arranged on the circular surfaces of both rotor disks.

According to another preferred embodiment of the invention, the stator comprises at least one stator blade having one end, the seal comprises a static portion arranged on the end of the stator blade, preferably said end faces the rotor.

According to another preferred embodiment of the invention, the seal has two rows of teeth, wherein a row of teeth is integral with the stator and another row of teeth is integral with the rotor.

According to another preferred embodiment, the the rotating machine is a gas turbine comprising at least one turbine and a compressor.

The invention will now be described with reference to the accompanying drawings, which show a non-limiting embodiment thereof, wherein:
- figure 1 is a side view, with a section along an axial longitudinal plane, of a rotating machine, in particular a gas turbine, according to an embodiment of the invention;
- figure 2 is an enlarged side view, with a partial section, of a detail of the rotating machine of figure 1, where you can see a seal according to an embodiment of the invention;
- figure 3 is an enlarged side view, with a partial section, of the seal of figure 2;
- figure 4 is a side view, with a partial section, of a seal according to an alternative embodiment with respect to the embodiment of figure 3;
- figure 5 is a side view, with a partial section, of a seal according to another alternative embodiment with respect to the embodiment of figure 3; and
- figure 6 is an enlarged side view, with a partial section, of a seal according to another alternative embodiment with respect to the embodiment of figure 3.

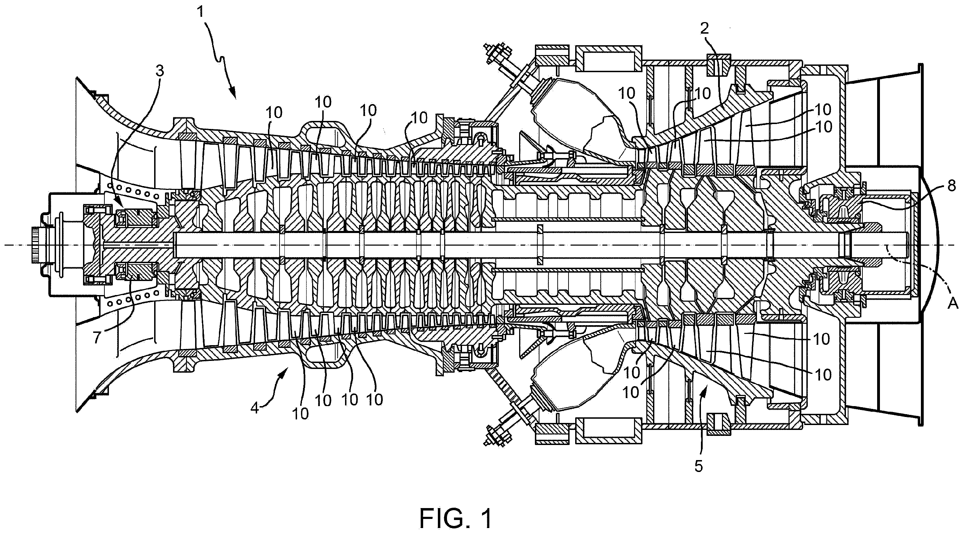

Figure 1 shows, as a whole, a rotating machine 1, in particular a gas turbine of a plant for the production of electrical energy.

The rotating machine 1 comprises a stator 2 and a rotor 3. The rotating machine 1 extends along an axis A and has a compressor section 4 and an expansion or turbine section 5. The stator 2 extends along the axis A in an annular manner.

The rotor 3 is housed inside the stator 2, and is supported in a rotary manner by means of a front bearing assembly 7, which is arranged close to the compressor section 4, and of a rear bearing assembly 8, which is arranged close to the turbine section 5.

The turbine section 5 of the rotor 3 is provided with a plurality of rotor blades 10, which are arranged in groups that are axially spaced apart from one another so as to for a plurality of expansion stages.

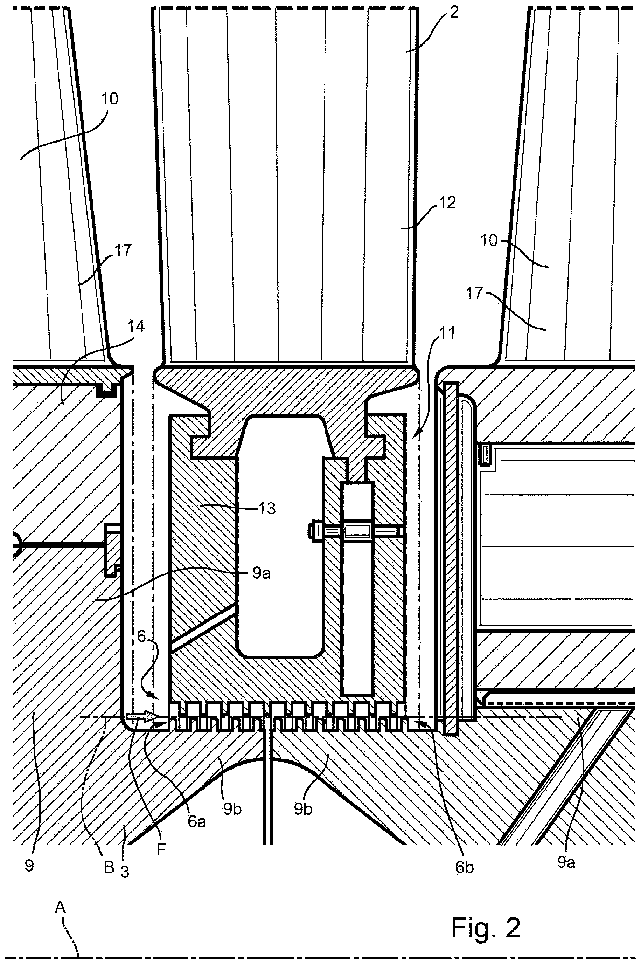

With reference to figure 2, the rotating machine 1 comprises a seal 6, which is arranged between the rotor 3 and the stator 2 and is designed so as to reduce the passage of a flow F from a first higher pressure side 6a to a second lower pressure side 6b. The seal 6, in a preferred - though not limiting - embodiment of the invention, is a labyrinth seal.

Furthermore, the rotor 3 comprises a plurality of disks 9, which are assembled with one another. Each disk 9 houses a respective rotor blade 10. Each disk 9 is shaped so as to have a portion 9a, in which the respective rotor blade 10 is fixed, and at least one portion 9b, in which it is joined to another disk 9. More in detail, all the disks 9 of the rotor 3, except the end disks, comprise two portions 9b to be joined to two respective disks 9 on opposite sides. The seal 6 is arranged along the portions 9b of the disks 9. In other words, the seal 6 is arranged along a circular surface of the disk 9.

The rotor 3 comprises a cavity 11, which is defined between two disks 9 and the respective rotor blades 10. The seal 6 is arranged in the cavity 11.

With reference to figures 1 and 2, the stator 2 comprises a plurality of stator blades 12, which extend radially to the axis A towards the rotor 3. The stator blades 12 have an end 13 facing the rotor 3 and adjacent thereto, which is at least partially housed in the cavity 11 between the rotor blades 10.

The seal 6 is arranged in the portions 9b of the two rotor disks 9 on one side, and in the end 13 of the stator 2 on the other side.

The disks 9 of the rotor 3 have different sizes and shapes depending on the portion of the compressor 4 or of the turbine 5 that they will occupy. Figure 2 only shows two disks 9 of the plurality of disks 9. In figure 1 you can see the plurality of disks making up the rotor 3.

Furthermore, each rotor blade 10 comprises a root 14 and an airfoil 17. The root 14 is connected to the respective rotor disk 9 in the portion 9a of the disk 9.

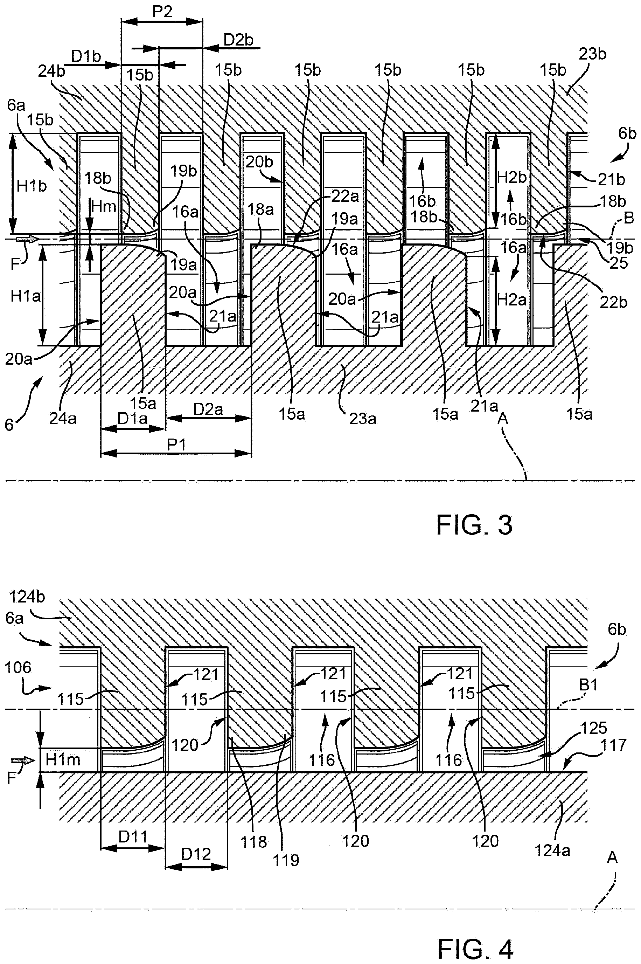

With reference to figure 3, the seal 6 extends along a direction of extension B from the higher pressure side 6a to the lower pressure side 6b and comprises a rotating portion 23a and a static portion 23b.

The rotating portion 23a is integral with the rotor 3. More in detail, the rotating portion 23a is connected to the rotor 3 or is directly made on the rotor 3.

The static portion 23b is integral with the stator 2. More in detail, the static portion 23b is connected to the stator 2 or is directly made on the stator 2.

The seal 6 comprises a base 24a; a row of teeth 15a, which extends in length parallel to the direction of extension B and protrudes from the base 24a radially to the direction B; a base 24b and a row of teeth 15b, which extends in length parallel to the direction of extension B and protrudes from the base 24b radially to the direction B. More in detail, the row of teeth 15a and the base 24a are comprised in the rotating portion 23a of the seal 6. The row of teeth 15b and the base 24b are comprised in the static portion 23b of the seal 6.

Furthermore, the seal 6 comprises an interstice 25, which separates the rotating portion 23a and the static portion 23b.

The interstice 25 is also commonly called "gap" and is the space separating the rows of teeth 15a and 15b and the bases 24a and 24b.

The row of teeth 15a is connected to the base 24a and the teeth 15a of the row of teeth 15a protrude towards the base 24b. The row of teeth 15b is connected to the base 24b and the teeth 15b of the row of teeth 15b protrude towards the base 24a. The base 24a is housed on the rotor 3. More in detail, the base 24a is connected to the rotor 3 or is part of the rotor 3, in which case the teeth 15a are directly made on the rotor 3 through a suitable processing, for example through a turning machining process.

The base 24b is housed on the stator 2. More in detail, the base 24b is connected to the stator 2 or is part of the stator 2, in which case the teeth 15b are directly made on the stator 2 through a suitable processing.

Each row of teeth 15a and 15b defines respective cavities 16a and 16b, each arranged between two respective adjacent teeth 15a and 15b of the same row of teeth 15a and 15b. The teeth 15a of the row of teeth 15a are distributed with a distribution pitch P1, which is constant. The teeth 15b of the row of teeth 15b are distributed with a distribution pitch P2, measured along the direction of extension B, which is constant. The distribution pitch P1 is different from the distribution pitch P2. In a preferred embodiment, the pitches P1 and P2 are measured along the direction of extension B. In another embodiment, which is not shown in the accompanying drawings, the pitches P1 and P2 are measured along the axis A.

The seal 6 is an annular seal, which extends in length parallel to the direction of extension B and annularly around the axis A. The teeth 15a and 15b annularly extend around the axis A.

With reference to figures 2 and 3, the row of teeth 15a is connected to the rotor 3 through the base 24a and the other row of teeth 15b is connected to the stator 2 through the base 24b.

Each tooth 15a and 15b has two respective surfaces 20a, 20b and 21a, 21b, which extend transversely to the direction of extension B, and a respective surface 22a, 22b, which extends from respective ends of the two respective surfaces 20a, 20b and 21a, 21b and transversely thereto. Said ends of the respective surfaces 20a, 20b and 21a, 21b are the ends opposite the respective bases 24a and 24b. Furthermore, both surfaces 20a, 20b and 21a, 21b extend annularly and uniformly around the axis A.

In a preferred - though not limiting - version of the invention, the surfaces 20a, 20b and 21a, 21b are perpendicular to the respective base 24a and 24b. Furthermore, the surfaces 20a, 20b and 21a, 21b are perpendicular to the direction of extension B.

The surfaces 22a and 22b are shaped in such a way that the incoming flow F is deviated towards the respective cavity 16a, 16b adjacent to the respective surface 21a, 21b. More in detail, the surfaces 22a and 22b have a profile, along the direction of extension B, that is curved, in particular convex, so as to deviate the incoming flow F towards the respective cavity 16a, 16b adjacent to the respective surface 21a, 21b.

In other words, the surfaces 22a and 22b extend from an end of the respective surfaces 20a and 20b to an end of the respective surfaces 21a and 21b degrading from the side 6a to the side 6b.

In another preferred embodiment, which is not shown in the accompanying drawings, the surfaces 22a and 22b are bevelled from the side 6a towards the side 6b, so as to deviate the incoming flow F towards the respective cavity 16a, 16b.

With reference to figure 3, the teeth 15a and 15b respectively have an edge 18a and 18b facing the higher pressure side 6a and an edge 19a and 19b facing the lower pressure side 6b. The edges 18a and 18b are defined by the respective surfaces 20a, 20b and by the respective surfaces 22a, 22b. The edges 19a and 19b are defined by the respective surfaces 21a, 21b and by the respective surfaces 22a and 22b. The edges 18a and 18b define a smaller angle compared to the respective edge 19a and 19b. In other words, the edges 19a and 19b are rounded in such a way that part of the flow F leaking in the seal 6 is deviated towards the respective cavity 16a and 16b adjacent to the respective edge 19a and 19b thanks to the Coanda effect. In another embodiment the edges 19a and 19b are bevelled to obtain the Coanda effect.

The surfaces 10a and 20b have a respective height H1a and H1b, which is measured perpendicularly to the direction of extension B. The surfaces 21a and 21b have a respective height H2a and H2b, which is measured perpendicularly to the direction of extension B. The height H1a is greater than the height H2a. The height H2a is greater than the height H2b.

The surfaces 22a and 22b and the surfaces 20a, 20b and 21a, 21b extend annularly and uniformly around the axis A.

The ratio between a thickness D1a of the tooth 15a and a width D2a of the cavity 16a is greater than 0.25. The thickness D1a of the tooth 15a is defined as the minimum distance between the two surfaces 20a and 21a of the tooth 15a. The width D2a of the cavity 16a is defined as the minimum distance between a surface 21a of one of the teeth 15a adjacent to the cavity 16a and the surface 20a of the other tooth 15a adjacent to the cavity 16a.

The ratio between the thickness D1a of the tooth 15a and the minimum height Hm of the interstice is greater than 0.3.

The ratio between a thickness D1b of the tooth 15b and a width D2b of the cavity 16b is greater than 0.25. The thickness of the tooth 15b is defined as the minimum distance between the two surfaces 20b and 21b of the tooth 15b. The width of the cavity 16b is defined as the minimum distance between a surface 21b of one of the teeth 15b adjacent to the cavity 16b and the surface 20b of the other tooth 15b adjacent to the cavity 16b.

The ratio between the thickness of the tooth 15b and the minimum height Hm of the interstice is greater than 0.3.

The teeth 15a and 15b of a same seal 6 extend annularly and uniformly around the axis A; as a consequence, said ratios of the teeth 15a and 15b are equal to one another for a same seal 6.

With reference to figure 4, number 106 indicates an embodiment of a seal that is alternative to the seal 6. The seal 106 comprises one single row of teeth 115, which is connected to a base 124b of the seal 106 and faces a base of the seal 106 having a smooth surface 117. The row of teeth 115 is connected to the stator 2 through the base 124b. The base 124a is connected to the rotor 3. In this case, an interstice 125 is the space extending between the row of teeth 115 and the surface 117.

Each tooth 115 has two surfaces 120 and 121, which extend transversely to the direction of extension B1, and a surface 122, which extends from an end of the two surfaces 120 and 121 and transversely thereto. Furthermore, both surfaces 120 and 121 extend annularly and uniformly around the axis A.

The surface 122 has a profile, along the direction of extension B1, that is curved, in particular convex, so as to deviate the incoming flow F towards the respective cavity 116 adjacent to the surface 121. In other words, the surface 122 extends from an end of the surface 120 to an end of the surface 121 degrading from the higher pressure side 6a to the lower pressure side 6b.

With reference to figure 4, the teeth 115 has an edge 118 facing the higher pressure side 6a and an edge 119 facing the lower pressure side 6b. The edge 118 defines a smaller angle compared to the respective edge 119. In other words, the edge 119 is rounded in such a way that part of the flow F leaking in the seal 106 is deviated towards the cavity 116 adjacent to the edge 119 thanks to the Coanda effect.

The surfaces 122, 120 and 121 extend annularly and uniformly around the axis A.

The ratio between a thickness D11 of the tooth 115 and a width D12 of the cavity 116 is greater than 0.25. The ratio between the thickness D11 of the tooth 115 and the minimum height H1m of the interstice 125 is greater than 0.3.

The teeth 115 of a same seal 106 extend annularly and uniformly around the axis A; as a consequence, said ratios of the teeth 115 are equal to one another for a same seal 106.

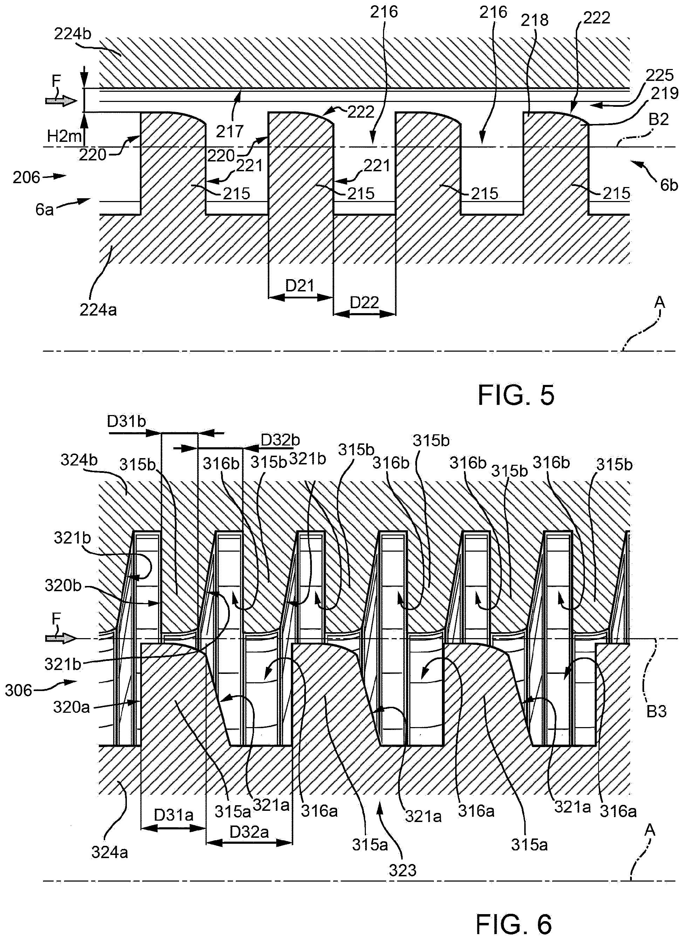

With reference to figure 5, number 206 indicates an embodiment of a seal that is alternative to the seal 106. The seal 206 comprises one single row of teeth 215, which is connected to a base 224a of the seal 206 and faces a base 224b of the seal 206 having a smooth surface 217. The row of teeth 215 is connected to the rotor 3 through the base 224a. The base is connected to the stator 2. In this case, the interstice 225 is the space extending between the row of teeth 215 and the surface 217.

Each tooth 215 has two surfaces 220 and 221, which extend transversely to the direction of extension B2, and a surface 222, which extends from an end of the two surfaces 220 and 221 and transversely thereto. Furthermore, both surfaces 220 and 221 extend annularly and uniformly around the axis A.

The surface 222 has a profile, along the direction of extension B2, that is curved, in particular convex, so as to deviate the incoming flow F towards the respective cavity 216 adjacent to the surface 221. In other words, the surface 222 extends from an end of the surface 220 to an end of the surface 221 degrading from the higher pressure side 6a to the lower pressure side 6b.

With reference to figure 5, the teeth 215 has an edge 218 facing the higher pressure side 6a and an edge 219 facing the lower pressure side 6b. The edge 218 defines a smaller angle compared to the respective edge 219. In other words, the edge 219 is rounded in such a way that part of the flow F leaking in the seal 206 is deviated towards the cavity 216 adjacent to the edge 219 thanks to the Coanda effect.

The surfaces 222, 220 and 221 extend annularly and uniformly around the axis A.

The ratio between a thickness D21 of the tooth 215 and a width D22 of the cavity 216 is greater than 0.25. The ratio between the thickness D21 of the tooth 215 and the minimum height H2m of the interstice 225 is greater than 0.3.

The teeth 215 of a same seal 206 extend annularly and uniformly around the axis A; as a consequence, said ratios of the teeth 215 are equal to one another for a same seal 206.

With reference to figure 6, number 306 indicates an embodiment of a seal that is alternative to the seal 6. The gasket 306 comprises two rows of teeth 315a and 315 b having respective side surfaces 320a, 320b and 321a, 321b. The surfaces 321a and 321b differ from the surfaces 21a and 21b of the rows of teeth 15a and 15b because they are inclined with respect to a respective base 324a and 324b 323 of the seal 306, so as to have a greater resistance to the force exerted by the flow F upon the tooth 315a, 315b. The surfaces 320a and 320b of the teeth 315a and 315, similarly to the surfaces 20a and 20b of the teeth 15a and 15b, are perpendicular to the respective base 324a and 324b.

Similarly to the seal 6, the seal 306 comprises cavities 316a and 316b arranged between two respective adjacent teeth 315a, 315b. Furthermore, the surfaces 321a and 321b are inclined with respect to a direction of extension B3 of the seal 306. In a non-limiting embodiment of the invention, the surface 321a forms a first angle with the base 324a, which is different from a second angle formed between the surface 321b and the base 324b.

In this embodiment and, in general, in those embodiments in which a thickness of the teeth 315a, 315b is not constant, the thickness D31a, D31b is calculated close to the free end of the tooth 315a, 315b. In other words, the thickness D31a, D31b is the distance between the surface 320a and 321a, 320b and 321b adjacent to the free end of the tooth 315a, 315b. As a consequence, in this embodiment, the thickness D31a and D31b is the minimum thickness of the tooth 315a, 315b.

In this embodiment and, in general, in those embodiments in which a thickness D32a, D32b of the cavities 316a, 316b is not constant, the thickness D32a, D32b is calculated close to the free ends of the two respective adjacent teeth 315a, 315b. As a consequence, in this embodiment, the thickness D32a and D32b is the maximum thickness of the cavity 316a, 316b.

Thanks to the invention, a greater part of a flow, compared to the prior art, is deviated towards the cavities, thus dissipating its kinetic energy and not leaking along the seal. In other words, thanks to the invention, the cavities receive a greater quantity of flow and, as a consequence, ensure better performances, as they better insulate the lower pressure side from the higher pressure side, hence limiting the flow flowing through the seal.

It is evident that the seal and the rotating machine described above can be subjected to changes and variations, without for this reason going beyond the scope of protection of the invention, as set forth in the appended claims.

## Claims

1. A seal for a rotating machine; the seal (6; 106; 206; 306) being arranged between a rotor and a stator so as to reduce the passage of a flow (F) from a first higher pressure side (6a) to a second lower pressure side (6b) and comprising at least a base (24a, 24b); at least one row of teeth (15a, 15b), which extends in length from the first side (6a) to the second side (6b) along a direction of extension (B) of the seal (6) and protrudes from the base (24a, 24b) radially to the direction of extension (B); at least one cavity (16) arranged between respective two adjacent teeth (15a, 15b) of the row of teeth (15a, 15b); wherein at least one of the teeth (15a, 15b) has a first and a second surface (20a, 21a; 20a, 20b) which extend transversely to the direction of extension (B), and a third surface (22a, 22b) which extends between the first and the second surface (20a, 21a; 20a, 20b) and transversely thereto; wherein the third surface (22a, 22b) is shaped so as to divert the incoming flow (F) towards the cavity (16a, 16b) adjacent to the second surface (21a, 21b); **characterized in that** the tooth (15a, 15b) has an edge (19a, 19b), defined by the third surface (22a, 22b) and by the second surface (21a, 21b), being rounded or bevelled so that a part of the flow (F) is deviated towards the cavity (16a, 16b) adjacent to the second surface (21a, 21b) due to the Coanda effect.

2. The seal of claim 1, wherein the first surface (20a, 20b) faces the first higher pressure side (6a) and has a first height (H1a, H1b) measured perpendicular to the direction of extension (B); and the second surface (21a, 21b) is facing the second lower pressure side (6b) and has a second height (H2a, H2b) measured perpendicular to the direction of extension (B) being lesser than the first height (H1a, H1b).

3. The seal of claim 1 or 2, wherein the third surface (22a, 22b) extends from one end of the first surface (20a, 20b) to one end of the second surface (21a, 21b) degrading along the direction from the first side (6a) to the second side (6b).

4. The seal of any of the preceding claims, wherein the third surface (22a, 22b) is curved, preferably convex with its convexity facing towards the second side (6b) at a lower pressure.

5. The seal of any preceding claims, wherein the ratio between a thickness (D1a, D1b) of the tooth (15a, 15b) and a width (D2a, D2b) of the cavity (16a, 16b) is greater than 0.25, preferably said ratios between different teeth (15a, 15b) and cavities (16a, 16b) of said row of teeth (15a, 15b) are equal one to the other.

6. The seal of any preceding claims, comprising a static part (24b), a rotating part (24a) and an interstice (25) separating the static part (24b) from the rotating part (24a); the ratio between a thickness (D1a) of the tooth (15a) and a minimum height (Hm) of the interstice (25) being greater than 0.3, preferably said ratios of the different teeth (15a, 15b) of said row of teeth (15a, 15b) being equal to each other.

7. The seal of any of the preceding claims, wherein the seal (6) is an annular gasket extending around an axis (A) of extension of the rotating machine (1); and wherein the teeth (15a, 15b) extend annularly around the axis (A) and the third surface (22a, 22b) extends annularly in a uniform manner around the axis (A).

8. The seal of any of the preceding claims, comprising another row of teeth (15b, 15a) comprising at least one cavity (16b, 16a) and facing the row of teeth (15b, 15a); preferably the interstice (25) extends between the row of teeth (15a, 15b) and the other row of teeth (15b, 15a).

9. The seal according to claim 8, wherein the teeth (15a, 15b) of the row of teeth (15a, 15b) are distributed with a first distribution pitch (P1, P2); the other teeth (15b, 15a) of the other row of teeth (15b, 15a) are distributed with a second distribution pitch (P2, P1); and wherein the first distribution pitch (P1, P2) is different from the second distribution pitch (P2, P1).

10. The seal of any one of the preceding claims, comprises a number of teeth (15a, 15b) greater than two; and wherein the teeth (15a, 15b) are distributed with a constant pitch along the direction of extension (B).

11. The seal of any one of the preceding claims, comprises a number of teeth (15a, 15b) greater than two and wherein the teeth (15a, 15b) of said row of teeth (15a, 15b) have a first and a second surface (20a, 21a, 20b, 21b) extending transversely to the direction of extension (B), and a third surface (22a, 22b) extending between the first and the second surface (20, 21) and transversely thereto; wherein the first surface (20a, 20b) faces the first higher pressure side (6a) and the second surface (21a, 21b) faces the second lower pressure side (6b); and wherein preferably the third surface (22a, 22b) extends from one end of the first surface (20a, 20b) to one end of the second surface (21a, 21b) degrading along the direction of extension in a direction that goes from the first side (6a) to the second side (6b).

12. The seal of any one of the preceding claims, wherein the seal (6) is labyrinth type.

13. The seal of any one of the preceding claims, wherein the seal comprises a base (324a, 324b) from which the row of teeth (315a, 315b) protrudes; the second surface (321a, 321b) is inclined with respect to the base (324a, 324b), preferably towards the second lower pressure side (6b) .

14. A rotating machine (12) having a stator (2); a rotor (3) and which extends along an axis (A); and a seal (6; 106; 206; 306) arranged between the stator (2) and the rotor (3), and made according to any one of the preceding claims.

15. The rotating machine of claim 14, wherein the row of teeth (15a, 15b) is connected to the rotor (3) or to the stator (2).

16. The rotating machine of claim 14 or 15, wherein the rotor (3) is formed by at least two rotor disks (9), joined one to the other and the seal (6) is arranged on the circular surfaces of both disks (9).

17. The rotating machine of one of claims 14 to 16, wherein the stator (2) comprises at least one stator blade (12) having one end (13), the seal (6; 106; 206; 306) comprises a static portion (23b) arranged on the end (13) of the stator blade (12), preferably said end (13) faces the rotor (3).

18. The rotating machine having a stator (2); a rotor (3) and which extends along an axis (A); and a seal (6) arranged between the stator (2) and the rotor (3) of the rotating machine (1), and made according to claim 8 or 9, and wherein the row of teeth (15) is integral with the rotor (3) and the other row of teeth (15) is integral with the stator (2) or vice versa.

19. The rotating machine of one of claims from 14 to 18, wherein the rotating machine (1) is a gas turbine comprising at least one turbine (5) and a compressor (4).

## Patentansprüche

1. Dichtung für eine rotierende Maschine; wobei die Dichtung (6; 106; 206; 306) zwischen einem Rotor und einem Stator angeordnet ist, um den Durchgang einer Strömung (F) von einer ersten Seite (6a) mit höherem Druck zu einer zweiten Seite (6b) mit niedrigerem Druck zu reduzieren, und wenigstens eine Basis (24a, 24b) umfasst; wenigstens eine Zahnreihe (15a, 15b), die sich in der Länge von der ersten Seite (6a) zu der zweiten Seite (6b) entlang einer Erstreckungsrichtung (B) der Dichtung (6) erstreckt und von der Basis (24a, 24b) radial zu der Erstreckungsrichtung (B) hervorsteht; wenigstens einen Hohlraum (16), der zwischen jeweils zwei benachbarten Zähnen (15a, 15b) der Zahnreihe (15a, 15b) angeordnet ist; wobei wenigstens einer der Zähne (15a, 15b) eine erste und eine zweite Oberfläche (20a, 21a; 20a, 20b) aufweist, die sich quer zu der Erstreckungsrichtung (B) erstrecken, und eine dritte Oberfläche (22a, 22b), die sich zwischen der ersten und der zweiten Oberfläche (20a, 21a; 20a, 20b) und quer zu diesen erstreckt; wobei die dritte Oberfläche (22a, 22b) so geformt ist, dass sie die eintretende Strömung (F) in Richtung zu dem an die zweite Oberfläche (21a, 21b) angrenzenden Hohlraum (16a, 16b) umlenkt; **dadurch gekennzeichnet, dass**
der Zahn (15a, 15b) eine Kante (19a, 19b) aufweist, die durch die dritte Oberfläche (22a, 22b) und durch die zweite Oberfläche (21a, 21b) definiert ist und abgerundet oder abgeschrägt ist, so dass ein Teil der Strömung (F) aufgrund des Coanda-Effekts in Richtung zu dem an die zweite Oberfläche (21a, 21b) angrenzenden Hohlraum (16a, 16b) umgelenkt wird.

2. Dichtung nach Anspruch 1, wobei die erste Oberfläche (20a, 20b) der ersten Seite (6a) mit höherem Druck zugewandt ist und eine erste Höhe (H1a, H1b) aufweist, die senkrecht zu der Erstreckungsrichtung (B) gemessen wird; und die zweite Oberfläche (21a, 21b) der zweiten Seite (6b) mit niedrigerem Druck zugewandt ist und eine zweite Höhe (H2a, H2b) aufweist, die senkrecht zu der Erstreckungsrichtung (B) gemessen wird und kleiner ist als die erste Höhe (H1a, H1b).

3. Dichtung nach Anspruch 1 oder 2, wobei sich die dritte Oberfläche (22a, 22b) von einem Ende der ersten Oberfläche (20a, 20b) zu einem Ende der zweiten Oberfläche (21a, 21b) erstreckt und entlang der Richtung von der ersten Seite (6a) zu der zweiten Seite (6b) abnimmt.

4. Dichtung nach einem der vorangehenden Ansprüche, wobei die dritte Oberfläche (22a, 22b) gekrümmt, vorzugsweise konvex ist und ihre Konvexität in Richtung zu der zweiten Seite (6b) mit niedrigerem Druck weist.

5. Dichtung nach einem der vorangehenden Ansprüche, wobei das Verhältnis zwischen einer Dicke (D1a, D1b) des Zahns (15a, 15b) und einer Breite (D2a, D2b) des Hohlraums (16a, 16b) größer als 0,25 ist, wobei vorzugsweise die Verhältnisse zwischen verschiedenen Zähnen (15a, 15b) und Hohlräumen (16a, 16b) der Zahnreihe (15a, 15b) einander gleichen.

6. Dichtung nach einem der vorangehenden Ansprüche, umfassend einen statischen Teil (24b), einen rotierenden Teil (24a) und einen Zwischenraum (25), der den feststehenden Teil (24b) von dem rotierenden Teil (24a) trennt; wobei das Verhältnis zwischen einer Dicke (D1a) des Zahns (15a) und einer Mindesthöhe (Hm) des Zwischenraums (25) größer als 0,3 ist, wobei vorzugsweise die Verhältnisse zwischen den verschiedenen Zähnen (15a, 15b) der Zahnreihe (15a, 15b) einander gleichen.

7. Dichtung nach einem der vorangehenden Ansprüche, wobei die Dichtung (6) eine ringförmige Dichtscheibe ist, die sich um eine Erstreckungsachse (A) der rotierenden Maschine (1) erstreckt; und wobei die Zähne (15a, 15b) sich ringförmig um die Achse (A) erstrecken und die dritte Oberfläche (22a, 22b) sich ringförmig in einer gleichmäßigen Weise um die Achse (A) erstreckt.

8. Dichtung nach einem der vorangehenden Ansprüche, umfassend eine weitere Zahnreihe (15b, 15a), die wenigstens einen Hohlraum (16b, 16a) aufweist und der Zahnreihe (15b, 15a) zugewandt ist; wobei sich der Zwischenraum (25) vorzugsweise zwischen der Zahnreihe (15a, 15b) und der anderen Zahnreihe (15b, 15a) erstreckt.

9. Dichtung nach Anspruch 8, wobei die Zähne (15a, 15b) der Zahnreihe (15a, 15b) mit einem ersten Verteilungsabstand (P1, P2) verteilt sind; die anderen Zähne (15b, 15a) der anderen Zahnreihe (15b, 15a) mit einem zweiten Verteilungsabstand (P2, P1) verteilt sind; und wobei der erste Verteilungsabstand (P1, P2) von dem zweiten Verteilungsabstand (P2, P1) verschieden ist.

10. Dichtung nach einem der vorangehenden Ansprüche, umfassend eine Anzahl von Zähnen (15a, 15b), die größer als zwei ist; und wobei die Zähne (15a, 15b) mit einem konstanten Abstand entlang der Erstreckungsrichtung (B) verteilt sind.

11. Dichtung nach einem der vorangehenden Ansprüche, umfassend eine Anzahl von Zähnen (15a, 15b), die größer als zwei ist, und wobei die Zähne (15a, 15b) der Zahnreihe (15a, 15b) eine erste und eine zweite Oberfläche (20a, 21a, 20b, 21b) aufweisen, die sich quer zu der Erstreckungsrichtung (B) erstrecken, und eine dritte Oberfläche (223, 22b), die sich zwischen der ersten und der zweiten Oberfläche (20, 21) und quer zu diesen erstreckt; wobei die erste Oberfläche (20a, 20b) der ersten Seite (6a) mit höherem Druck zugewandt ist und die zweite Oberfläche (21a, 21b) der zweiten Seite (6b) mit niedrigerem Druck zugewandt ist; und wobei sich die dritte Oberfläche (223, 22b) vorzugsweise von einem Ende der ersten Oberfläche (20a, 20b) zu einem Ende der zweiten Oberfläche (21a, 21b) erstreckt und entlang der Erstreckungsrichtung in einer Richtung abnimmt, die von der ersten Seite (6a) zu der zweiten Seite (6b) verläuft.

12. Dichtung nach einem der vorangehenden Ansprüche, wobei die Dichtung (6) vom Labyrinth-Typ ist.

13. Dichtung nach einem der vorangehenden Ansprüche, wobei die Dichtung eine Basis (324a, 324b) umfasst, von der die Zahnreihe (315a, 315b) hervorsteht; wobei die zweite Oberfläche (321a, 321b) in Bezug auf die Basis (324a, 324b) geneigt ist, vorzugsweise in Richtung zu der zweiten Seite (6b) mit niedrigerem Druck.

14. Rotierende Maschine (12) mit einem Stator (2); einem Rotor (3), der sich entlang einer Achse (A) erstreckt; und einer Dichtung (6; 106; 206; 306), die zwischen dem Stator (2) und dem Rotor (3) angeordnet ist, und die gemäß einem der vorangehenden Ansprüche gefertigt ist.

15. Rotierende Maschine nach Anspruch 14, wobei die Zahnreihe (15a, 15b) mit dem Rotor (3) oder mit dem Stator (2) verbunden ist.

16. Rotierende Maschine nach Anspruch 14 oder 15, wobei der Rotor (3) von wenigstens zwei miteinander verbundenen Rotorscheiben (9) gebildet wird und die Dichtung (6) an den Kreisoberflächen beider Scheiben (9) angeordnet ist.

17. Rotierende Maschine nach einem der Ansprüche 14 bis 16, wobei der Stator (2) wenigstens eine Statorschaufel (12) mit einem Ende (13) umfasst, die Dichtung (6; 106; 206; 306) einen statischen Abschnitt (23b) umfasst, der an dem Ende (13) der Statorschaufel (12) angeordnet ist, wobei vorzugsweise das Ende (13) dem Rotor (3) zugewandt ist.

18. Rotierende Maschine mit einem Stator (2); einem Rotor (3), der sich entlang einer Achse (A) erstreckt; und einer Dichtung (6), die zwischen dem Stator (2) und dem Rotor (3) der rotierenden Maschine (1) angeordnet ist, und die gemäß Anspruch 8 oder 9 gefertigt ist, wobei die Zahnreihe (15) mit dem Rotor (3) und die andere Zahnreihe (15) mit dem Stator (2), oder umgekehrt, integral ausgebildet ist.

19. Rotierende Maschine nach einem der Ansprüche 14 bis 18, wobei die rotierende Maschine (1) eine Gasturbine ist, die wenigstens eine Turbine (5) und einen Verdichter (4) umfasst.

## Revendications

1. Joint pour machine rotative ; le joint (6 ; 106 ; 206 ; 306) étant disposé entre un rotor et un stator de manière à réduire le passage d'un flux (F) d'un premier côté de pression supérieure (6a) à un second côté de pression inférieure (6b) et comprenant au moins une base (24a, 24b) ; au moins une rangée de dents (15a, 15b), qui s'étend en longueur du premier côté (6a) au second côté (6b) le long d'une direction d'extension (B) du joint (6) et qui dépasse de la base (24a, 24b) radialement à la direction d'extension (B) ; au moins une cavité (16) prévue entre deux dents adjacentes respectives (15a, 15b) de la rangée de dents (15a, 15b) ; dans lequel au moins une des dents (15a, 15b) a une première et une deuxième surface (20a, 21a ; 20a, 20b) qui s'étendent transversalement à la direction d'extension (B), et une troisième surface (22a, 22b) qui s'étend entre la première et la deuxième surface (20a, 21a ; 20a, 20b) et transversalement à celles-ci ; dans lequel la troisième surface (22a, 22b) est formée de manière à dévier le flux entrant (F) vers la cavité (16a, 16b) adjacente à la deuxième surface (21a, 21b) ; **caractérisé en ce que** la dent (15a, 15b) a un bord (19a, 19b) défini par la troisième surface (22a, 22b) et la deuxième surface (21a, 21b), lequel est arrondi ou biseauté de sorte qu'une partie du flux (F) est déviée vers la cavité (16a, 16b) adjacente à la deuxième surface (21a, 21b) en raison de l'effet Coand 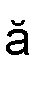 .

2. Joint de la revendication 1, dans lequel la première surface (20a, 20b) fait face au premier côté de pression supérieure (6a) et a une première hauteur (H1a, H1b) mesurée perpendiculairement à la direction d'extension (B) ; et la deuxième surface (21a, 21b) fait face au second côté de pression inférieure (6b) et a une seconde hauteur (H2a, H2b) mesurée perpendiculairement à la direction d'extension (B) qui est inférieure à la première hauteur (H1a, H1b).

3. Joint de la revendication 1 ou 2, dans lequel la troisième surface (22a, 22b) s'étend d'une extrémité de la première surface (20a, 20b) à une extrémité de la deuxième surface (21a, 21b) en déclinant le long de la direction allant du premier côté (6a) au second côté (6b).

4. Joint de l'une quelconque des revendications précédentes, dans lequel la troisième surface (22a, 22b) est courbe, de préférence convexe avec sa convexité tournée vers le second côté (6b) de pression inférieure.

5. Joint de l'une quelconque des revendications précédentes, dans lequel le rapport entre une épaisseur (D1a, D1b) de la dent (15a, 15b) et une largeur (D2a, D2b) de la cavité (16a, 16b) est supérieur à 0,25, lesdits rapports entre les différentes dents (15a, 15b) et cavités (16a, 16b) de ladite rangée de dents (15a, 15b) étant de préférence égaux les uns aux autres.

6. Joint de l'une quelconque des revendications précédentes, comprenant une partie statique (24b), une partie rotative (24a) et un interstice (25) séparant la partie statique (24b) de la partie rotative (24a) ; le rapport entre une épaisseur (D1a) de la dent (15a) et une hauteur minimale (Hm) de l'interstice (25) étant supérieur à 0,3, lesdits rapports des différentes dents (15a, 15b) de ladite rangée de dents (15a, 15b) étant de préférence égaux les uns aux autres.

7. Joint de l'une quelconque des revendications précédentes, dans lequel le joint (6) est un joint annulaire s'étendant autour d'un axe (A) d'extension de la machine rotative (1) ; et dans lequel les dents (15a, 15b) s'étendent de manière annulaire autour de l'axe (A) et la troisième surface (22a, 22b) s'étend de manière annulaire et uniforme autour de l'axe (A).

8. Joint de l'une quelconque des revendications précédentes, comprenant une autre rangée de dents (15b, 15a) comprenant au moins une cavité (16b, 16a) et faisant face à la rangée de dents (15b, 15a) ; l'interstice (25) s'étendant de préférence entre la rangée de dents (15a, 15b) et l'autre rangée de dents (15b, 15a).

9. Joint selon la revendication 8, dans lequel les dents (15a, 15b) de la rangée de dents (15a, 15b) sont distribuées selon un premier pas de distribution (P1, P2) ; les autres dents (15b, 15a) de l'autre rangée de dents (15b, 15a) sont distribuées selon un second pas de distribution (P2, P1) ; et dans lequel le premier pas de distribution (P1, P2) est différent du second pas de distribution (P2, P1).

10. Joint de l'une quelconque des revendications précédentes, dans lequel le joint comprend un nombre de dents (15a, 15b) supérieur à deux ; et dans lequel les dents (15a, 15b) sont distribuées selon un pas constant le long de la direction d'extension (B).

11. Joint de l'une quelconque des revendications précédentes, dans lequel le joint comprend un nombre de dents (15a, 15b) supérieur à deux et dans lequel les dents (15a, 15b) de ladite rangée de dents (15a, 15b) ont une première et une deuxième surface (20a, 21a, 20b, 21b) s'étendant transversalement à la direction d'extension (B), et une troisième surface (22a, 22b) s'étendant entre la première et la deuxième surface (20, 21) et transversalement à celles-ci ; dans lequel la première surface (20a, 20b) fait face au premier côté de pression supérieure (6a) et la deuxième surface (21a, 21b) fait face au second côté de pression inférieure (6b) ; et dans lequel, de préférence, la troisième surface (22a, 22b) s'étend d'une extrémité de la première surface (20a, 20b) à une extrémité de la deuxième surface (21a, 21b) en déclinant le long de la direction d'extension dans une direction allant du premier côté (6a) au second côté (6b).

12. Joint de l'une quelconque des revendications précédentes, dans lequel le joint (6) est de type labyrinthe.

13. Joint de l'une quelconque des revendications précédentes, dans lequel le joint comprend une base (324a, 324b) de laquelle dépasse la rangée de dents (315a, 315b) ; la deuxième surface (321a, 321b) est inclinée par rapport à la base (324a, 324b), de préférence vers le second côté de pression inférieure (6b).

14. Machine rotative (12) comprenant un stator (2) ; un rotor (3) qui s'étend le long d'un axe (A) ; et un joint (6 ; 106 ; 206 ; 306) disposé entre le stator (2) et le rotor (3), et conçu selon l'une quelconque des revendications précédentes.

15. Machine rotative de la revendication 14, dans laquelle la rangée de dents (15a, 15b) est reliée au rotor (3) ou au stator (2).

16. Machine rotative de la revendication 14 ou 15, dans laquelle le rotor (3) est formé par au moins deux disques de rotor (9) joints l'un à l'autre et le joint (6) est disposé sur les surfaces circulaires des deux disques (9).

17. Machine rotative de l'une des revendications 14 à 16, dans laquelle le stator (2) comprend au moins une aube de stator (12) ayant une extrémité (13), le joint (6 ; 106 ; 206 ; 306) comprend une partie statique (23b) disposée sur l'extrémité (13) de l'aube de stator (12), ladite extrémité (13) fait de préférence face au rotor (3).

18. Machine rotative comprenant un stator (2) ; un rotor (3) qui s'étend le long d'un axe (A) ; et un joint (6) disposé entre le stator (2) et le rotor (3) de la machine rotative (1), et conçu selon la revendication 8 ou 9, et dans laquelle la rangée de dents (15) est solidaire du rotor (3) et l'autre rangée de dents (15) est solidaire du stator (2) ou inversement.

19. Machine rotative de l'une des revendications 14 à 18, dans laquelle la machine rotative (1) est une turbine à gaz comprenant au moins une turbine (5) et un compresseur (4).
